(19) Europäisches Patentamt
European Patent Office
Office européen des brevets

(11) **EP 3 222 741 A1**

(12) **EUROPEAN PATENT APPLICATION**
published in accordance with Art. 153(4) EPC

(43) Date of publication:
27.09.2017 Bulletin 2017/39

(21) Application number: 15860677.2

(22) Date of filing: 20.11.2015

(51) Int Cl.:
*C22C 38/00* (2006.01)      *C21D 9/46* (2006.01)
*C22C 38/06* (2006.01)      *C22C 38/58* (2006.01)

(86) International application number:
**PCT/JP2015/082758**

(87) International publication number:
**WO 2016/080534 (26.05.2016 Gazette 2016/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **21.11.2014 JP 2014236928**

(71) Applicant: **Kabushiki Kaisha Kobe Seiko Sho
(Kobe Steel, Ltd.)
Kobe-shi, Hyogo 651-8585 (JP)**

(72) Inventors:
• **MURAKAMI, Toshio
Kobe-shi
Hyogo 651-2271 (JP)**
• **OTANI, Shigeo
Kobe-shi
Hyogo 651-2271 (JP)**

(74) Representative: **Müller-Boré & Partner
Patentanwälte PartG mbB
Friedenheimer Brücke 21
80639 München (DE)**

(54) **HIGH STRENGTH HIGH DUCTILITY STEEL PLATE**

(57)    In the present invention, a steel plate contains specific alloy components, has a steel structure that contains specific proportions of retained austenite and ferrite, with the remainder comprising one or more types selected from among bainite, martensite, tempered bainite and tempered martensite, and has a specific average carbon concentration and carbon concentration distribution in the retained austenite.

# EP 3 222 741 A1

**Description**

TECHNICAL FIELD

The present invention relates to a high-strength high-ductility steel sheet useful, for example, as a thin steel sheet for automobiles. More specifically, the present invention relates to a technique for enhancing the strength-ductility balance of a steel sheet.

BACKGROUND ART

A steel sheet used, for example, for automotive skeleton parts is required not only to have higher strength with the purpose of, e.g., collision safety and reducing fuel consumption by weight saving of vehicle body but also to have excellent formability for forming into skeleton parts having a complicated shape as well as weldability in joining parts with each other to assemble ASSY. Accordingly, development of a steel sheet, as specifically required mechanical properties (hereinafter, sometimes simply referred to as "properties"), capable of ensuring a tensile strength (TS) of 980 MPa or more and a tensile strength (TS) × elongation (EL) of 25,000 MPa·% or more while keeping the carbon amount 0.3 mass% or less is demanded.

In a high-strength steel sheet of 980 MPa class or more, for both achieving high strength and ensuring high ductility, it is effective to use a TRIP steel, a TBF steel, etc. each utilizing a TRIP effect of retained austenite. With an attempt to more enhance the strength-ductility balance of these steels, various studies are being made on the amount, average carbon concentration and form of retained austenite, and steel sheets having better properties have been proposed (see, for example, Patent Documents 1 to 3).

For example, Patent Document 1 has proposed a high-strength thin steel sheet excellent in the elongation and press forming stability, in which the form of retained austenite in steel microstructure is classified into lath form and island form and the proportion of retained austenite with island morphology is controlled to a certain range. In this technique, good elongation at a temperature of 100 to 200°C is realized, in addition to good elongation at room temperature, but it is assumed that YR and strength-ductility balance, which are effective material factors as collision properties, cannot be sufficiently ensured. Thus, it seems unlikely that the required level is satisfied.

Patent Document 2 has proposed a high-strength cold-rolled steel sheet, in which the integration degree of crystal orientation of austenite phase in a steel microstructure is increased and uniform elongation in a 45° direction relative to the rolling direction is thereby remarkably improved. However, the properties in the rolling direction and a direction at a right angle to the rolling direction, which are general directions for ductility evaluation, are not particularly notable, and it seems unlikely that the required level is satisfied.

Patent Document 3 has proposed a high-strength thin steel sheet, in which a C concentration difference is provided between the surface and the inside of a retained austenite grain in a steel microstructure and the bake hardenability and strength-ductility balance are thereby improved. However, in this technique, the providing of a C concentration difference in a retained austenite grain is only with a main aim to improve the bake hardenability, and unlike the present invention, it is not intended to impart a required carbon concentration distribution to retained austenite so as to improve the stability of retained austenite and thereby enhance the ductility. Thus, the technical idea thereof is utterly different from that of the present invention.

PRIOR ART LITERATURE

PATENT DOCUMENT

Patent Document 1: JP-A-2012-41573
Patent Document 2: JP-A-2012-21225
Patent Document 3: JP-A-2012-31505

SUMMARY OF THE INVENTION

PROBLEMS THAT THE INVENTION IS TO SOLVE

An object of the present invention is to provide a high-strength high-ductility steel sheet having excellent strength-ductility balance, in which the tensile strength (TS) is 980 MPa or more and the tensile strength (TS) × elongation (EL) is 25,000 MPa·% or more.

MEANS FOR SOLVING THE PROBLEMS

The high-strength high-ductility steel sheet according to a first aspect of the present invention has a component composition containing, in mass%,

C: from 0.10 to 0.30%,
Si+Al: from 0.5 to 2.0%,
Mn: from 1.0 to 4.0%,
P: from 0 to 0.05%, and
S: from 0 to 0.01%,
with the remainder being iron and an unavoidable impurity,
in which a steel microstructure contains,
in terms of an area ratio relative to the entire microstructure,
8% or more of a retained austenite and
more than 5% and 50% or less of ferrite,
with the remainder being one member or two or more members of bainite, martensite, tempered bainite, and tempered martensite, and
with respect to a carbon concentration in the retained austenite,
an average carbon concentration is from 0.8 to 1.1 mass%,
a standard deviation of a carbon concentration distribution is 0.25 mass% or more, and
an area ratio of a region having the carbon concentration of 1.3 mass% or more, relative to the entire microstructure, is 1.0% or more.

The high-strength high-ductility steel sheet according to a second aspect of the present invention is the one in the first aspect, in which the component composition further contains, in mass%,
a total of 1.0% or less of one member or two or more members of Cu, Ni, Mo, Cr, and B.

The high-strength high-ductility steel sheet according to a third aspect of the present invention is one in the first or second aspect, in which the component composition further contains, in mass%,
a total of 0.2% or less of one member or two or more members of V, Nb, Ti, Zr, and Hf.

The high-strength high-ductility steel sheet according to a fourth aspect of the present invention is the one in any one invention of the first to third aspects, in which the component composition further contains, in mass%,
a total of 0.01 % or less of one member or two or more members of Ca, Mg and REM.

ADVANTAGE OF THE INVENTION

According to the present invention, not only the amount (area ratio) and average carbon concentration of retained austenite are specified but also the carbon concentration distribution is controlled, and a TRIP phenomenon is thereby expressed from the early stage to the later stage of deformation to realize a high work hardening rate, so that a high-strength high-ductility steel sheet excellent in the strength-ductility balance and capable of ensuring a tensile strength (TS) of 980 MPa or more and a tensile strength (TS) $\times$ elongation (EL) of 25,000 MPa·% or more can be provided.

BRIEF DESCRIPTION OF THE DRAWINGS

[Fig. 1] Fig. 1 is a view schematically illustrating the diffraction peak of retained $\gamma$ as measured by X-ray diffractometry.
[Fig. 2] Fig. 2 is a view schematically illustrating the heat treatment conditions for manufacturing the high-strength high-ductility steel sheet according to the present invention.

MODES FOR CARRYING OUT THE INVENTION

In order to solve the above-described problem, the present inventors have made a variety of studies on measures capable of ensuring, in a steel sheet composed of TRIP steel, as the mechanical properties thereof, a tensile strength (TS) of 980 MPa or more and a tensile strength (TS) $\times$ elongation (EL) of 25,000 MPa·% or more. As a result, it has been conceived that the above-described desired properties can be ensured based on the following thoughts and investigations.

That is, in order to more enhance the strength-ductility balance than in conventional techniques, retained austenite (hereinafter, sometimes referred to as "retained $\gamma$") promoting the TRIP phenomenon must be more effectively utilized. However, there is a restriction on the upper limit of the C content in the steel sheet from the viewpoint of ensuring weldability of the steel sheet, and this imposes a limit in increasing the amount of retained $\gamma$ and the average carbon

concentration in retained $\gamma$.

Accordingly, the present inventors focused attention on the carbon concentration distribution in retained $\gamma$. More specifically, in order to achieve high strength and high ductility by the TRIP phenomenon, it is important to realize a high work hardening rate from the early stage to the middle stage of deformation, and for this purpose, unstable retained $\gamma$ with a low carbon concentration must be present in part. On the other hand, in order to maintain a high work hardening rate upon increase in the deformation amount, i.e., in the later stage of deformation, stable retained $\gamma$ with a high carbon concentration must also be produced.

In other words, it is not enough for retained $\gamma$ that only ones having high stability are present or that only ones having low stability are present, and what is important is that a broad range of stability, i.e., carbon concentration distribution, is present.

The present inventors have further advanced studies based on the knowledge above and accomplished the present invention.

First, the steel microstructure (hereinafter, sometimes simply referred to as "microstructure") characterizing the high-strength high-ductility steel sheet according to the present invention (hereinafter, sometimes referred to as "steel sheet of the present invention") is described below.

[Steel microstructure of steel sheet of the present invention]

As described above, the steel sheet of the present invention is based on a TRIP steel microstructure but differs from those conventional techniques particularly in that it contains a predetermined amount of retained $\gamma$ having a predetermined carbon concentration and the carbon concentration distribution in the retained $\gamma$ is controlled.

<Retained austenite: 8% or more in terms of area ratio relative to the entire microstructure>

Retained $\gamma$ is useful for enhancing the ductility, and in order to effectively bring out such an action, must be present in a ratio of, in terms of area ratio relative to the entire microstructure, 8% or more, preferably 9% or more, more preferably 10% or more. The area ratio of retained $\gamma$ is preferably 20% or less, more preferably 18% or less.

<Ferrite: more than 5% and 50% or less in terms of area ratio relative to the entire microstructure>

This is because ferrite is introduced so as to produce a distortion distribution between ferrite-hard phase and thereby enhance the strength-ductility balance. The presence of ferrite prevents distortion from concentrating particularly on retained $\gamma$, and an effect that even retained $\gamma$ with a low carbon concentration can contribute to enhancement of the properties is thereby obtained. In order to effectively bring out such an action, ferrite must be present in a ratio of, in terms of area ratio relative to the entire microstructure, more than 5%, preferably 8% or more, more preferably 10% or more. However, if ferrite is present excessively, the strength of the steel sheet cannot be ensured, and the area ratio of ferrite relative to the entire microstructure is therefore limited to 50% or less, preferably 45% or less, more preferably 40% or less.

<Remainder: one member or two or more members of bainite, martensite, tempered bainite, and tempered martensite>

As the remainder microstructure other than retained $\gamma$ and ferrite, the matrix is constructed by bainite, martensite, which are a fine and uniform microstructure, and/or a tempered microstructure thereof, so that refinement of the matrix microstructure can prevent deformation in low loading, leading to an increase in the yield strength YS.

<Average carbon concentration ($\%C_{\gamma R}$) in retained $\gamma$: from 0.8 to 1.1 mass%>

The $\%C_{\gamma R}$ is an index affecting the stability of transformation of retained $\gamma$ to martensite in deformation. If $\%C_{\gamma R}$ is too low, retained $\gamma$ is unstable, allowing occurrence of work-induced martensite transformation after stress application but before plastic deformation, and predetermined elongation is not obtained. On the other hand, if $\%C_{\gamma R}$ is too high, retained $\gamma$ is excessively stable, resulting in no occurrence of work-induced martensite transformation even when worked, and predetermined stretch flangeability is not obtained as well. In order to obtain predetermined elongation, the $\%C_{\gamma R}$ must be from 0.8 to 1.1 mass%. The lower limit of $\%C_{\gamma R}$ is 0.9 mass%.

<Standard deviation of carbon concentration distribution in retained $\gamma$: 0.25 mass% or more>

This is because the carbon concentration distribution in retained $\gamma$ is broadened so as to produce retained $\gamma$ differing in the stability in order to increase and maintain the work hardening rate from the early stage to the later stage of deformation. In order to effectively bring out such an action, the standard deviation of the carbon concentration distribution in retained γ must be 0.25 mass% or more, preferably 0.30 mass% or more, more preferably 0.35 mass% or more. In the high-strength high-ductility steel sheet according to the present invention, the standard deviation of the carbon concentration distribution in retained γ has an upper limit of about 0.60 mass% in practice and is preferably 0.55 mass% or less, more preferably 0.50 mass% or less.

<Region having carbon concentration of 1.3 mass% or more in retained γ: 1.0% or more in terms of area ratio relative to the entire microstructure>

In order to increase the elongation, the important thing is that the stability of retained γ upon increase in the distortion amount is high, and for this purpose, it is not sufficient only that the carbon concentration is averagely high, but retained γ having high stability, i.e., a high carbon concentration, must be present in a certain amount or more. Specifically, a region having the carbon concentration of 1.3 mass% or more in retained γ must be present in a ratio of, in terms of area ratio relative to the entire microstructure, 1.0% or more, preferably 1.5% or more, more preferably 2.0% or more. In the high-strength high-ductility steel sheet according to the present invention, the area ratio of a region having the carbon concentration of 1.3 mass% or more in retained γ, relative to the entire microstructure, has an upper limit of about 1/2 of the total retained γ area and is preferably 2/5 or less, more preferably 1/3 or less.

[Method for measuring each of area ratio of retained γ, average carbon concentration (%$C_{\gamma R}$) in retained γ, and carbon concentration distribution thereof]

Here, the method for measuring each of the area ratios of retained γ and ferrite and the average carbon concentration (%$C_{\gamma R}$) and carbon concentration distribution in retained γ is described.

As to the area ratio ($V_{\gamma R}$) of retained γ and the average carbon concentration (%$C_{\gamma R}$) in retained γ, the steel sheet was ground to 1/4 thickness, then chemically polished and measured by X-ray diffraction method (ISIJ Int., Vol. 33 (1933), No. 7, page 776). In the present invention, a two-dimensional X-ray microdiffractometer (RINT RAPID II) manufactured by Rigaku Corporation was used as the X-ray diffraction apparatus, and a Co-Kα ray was used as the X-ray.

As to the microstructure other than retained γ, the steel sheet was subjected to Nital etching and observed by an optical microscope (magnification: 400 times) to identify microstructures other than retained γ, and out of them, the area ratio of ferrite was determined.

The carbon concentration distribution in retained γ was determined as follows by using three diffraction peaks of (200)γ, (220)γ and (311)γ measured by the X-ray diffraction apparatus above.

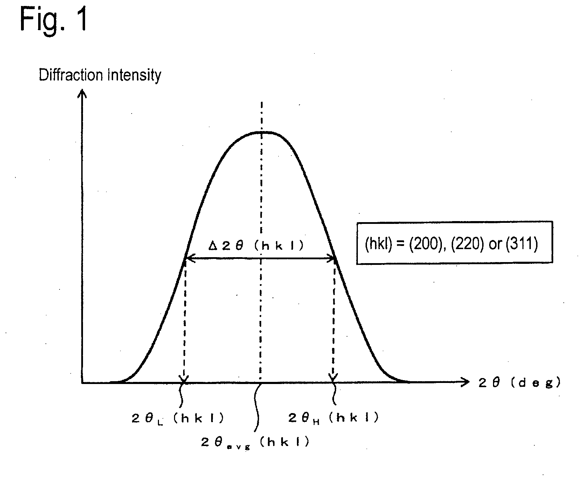

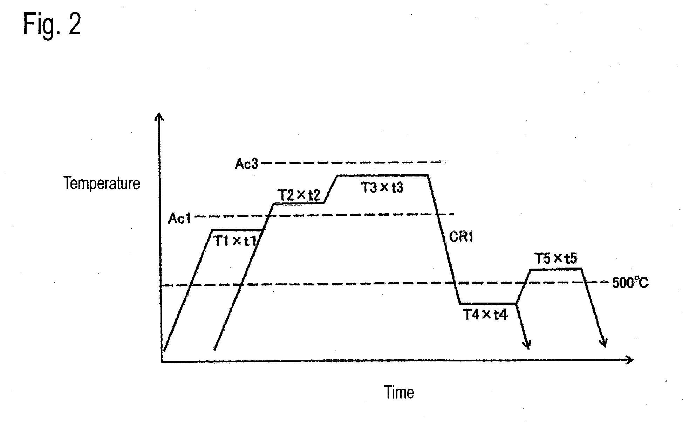

First, as illustrated in the pattern diagram of Fig. 1, 2θ ($2\theta_{avg}$(hkl)) showing a maximum diffraction intensity and a half value width Δ2θ(hkl) thereof were determined for each of three diffraction peaks of (200)γ, (220)γ and (311)γ. Here, (hkl) means (200), (220) or (311) (hereinafter the same).

Subsequently, d(hkl) was determined from $2\theta_{avg}$(hkl) according to the following formula (1) by using the Bragg condition of λ=2d sinθ (d: diffraction grating constant, λ: wavelength of Co-Kα ray).

$$d(hkl) = \lambda / \{2\sin(2\theta_{avg}(hkl)/2)\} \text{ ... formula (1)}$$

The crystal lattice constant $a_0$(hkl) was then determined according to the following formula (3), and these three crystal lattice constants $a_0$(hkl) were arithmetically averaged to determine the crystal lattice constant $a_0$.

$$a_0(hkl) = d(hkl)\sqrt{(h^2+k^2+l^2)} \text{ ... formula (2)}$$

The carbon concentration %$C_{avg}$ (unit: mass%) was then determined by using the Dyson equation (Dyson D.J., Holmes B. (1970), "Effect of alloying additions on the lattice parameter austenite", J. Iron Steel Inst., 208:469-474) represented by the following formula (3) (note here that this carbon concentration %$C_{avg}$ is used only as an index for specifying the carbon concentration distribution and to be exact, does not necessarily correspond to the separately measured average carbon concentration %$C_{\gamma R}$).

$$\%C_{avg} = (1/0.033) \cdot (a_0 - 0.0012 \cdot \%Mn + 0.00157\%Si - 0.0056 \cdot \%Al) \text{ ... formula (3)}$$

Here, %Mn, %Si and %Al are respectively contents (mass%) of Mn, Si and Al in the steel sheet.

Next, the half value width $\Delta$%C of the carbon concentration distribution in retained $\gamma$ was determined by the following procedure.

First, the diffraction angles at upper and lower limits of the half value width $\Delta 2\theta(hkl)$ of the diffraction angle $2\theta(hkl)$ of each peak were determined by the following formulae (4) and (5) (see, Fig. 1).

$$2\theta_L(hkl)=2\theta_{avg}(hkl)-\Delta 2\theta(hkl)/2 \ ... \text{ formula (4)}$$

$$2\theta_H(hkl)=2\theta_{avg}(hkl)+\Delta 2\theta(hkl)/2 \ ... \text{ formula (5)}$$

The upper and lower limit values %$C_L$ and %$C_H$ of the half value width of the carbon concentration distribution were determined by using $2\theta_L(hkl)$ and $2\theta_H(hkl)$ above, respectively, by the same procedure as above by using the Bragg condition and formulae (1) to (3). The half value width $\Delta$%C of the carbon concentration distribution was determined according to the following formula (6).

$$\Delta\%C=\%C_H-\%C_L \ ... \text{ formula (6)}$$

Assuming that the carbon concentration distribution is a normal distribution, the standard deviation $\sigma_{\%C}$ was calculated from the half value width $\Delta$%C as follows.

That is, the probability density function f(x) of the normal distribution is represented by the following formula (7) using the average value u and the standard deviation $\sigma$.

$$f(x)=\{1/\sqrt{(2\pi\sigma)}\}\cdot\exp\{-(x-u)^2/(2\sigma^2)\} \ ... \text{ formula (7)}$$

The probability f(u) in the average value is determined according to the following formula (8) by substituting x=u into formula (7).

$$f(u)=1/\sqrt{(2\pi\sigma)} \ ... \text{ formula (8)}$$

Since the probability density f(%$C_{avg}\pm\Delta$%C/2) at a value (%$C_{avg}+\Delta$%C/2) moved up or down by 1/2 of the half value width $\Delta$%C from the average value u=%$C_{avg}$ is 1/2 of the probability density f(u)=f(%$C_{avg}$) at an average value u=%$C_{avg}$, the relationship of the following formula (9) is obtained from formulae (7) and (8)

$$\{1/\sqrt{(2\pi\sigma_{\%C})}\}\cdot\exp\{-(\Delta\%C/2)^2/(2\sigma_{\%C}^2)\}=1/\{2\sqrt{(2\pi\sigma_{\%C})}\} \ ... \text{ formula (9)}$$

By modifying formula (9), the following formula (10) is derived as a formula to determine the standard deviation $\sigma_{\%C}$ from the half value width $\Delta$%C, and the standard deviation $\sigma_{\%C}$ was calculated by substituting the half value width $\Delta$%C into formula (10)

$$\sigma_{\%C}=\sqrt{\{(\Delta\%C/2)^2/(2\ln 2)\}} \ ... \text{ formula (10)}$$

The following formula (12) was derived as a formula to determine the area ratio $V_{\gamma R}(C\geq 1.3\%)$ of a region having the carbon concentration of 1.3 mass% or more, relative to the entire microstructure, from the cumulative density function g(x) represented by the following formula (11) by using the average value %$C_{avg}$ and $\sigma_{\%C}$ of the carbon concentration distribution in retained $\gamma$ determined as above, and $V_{\gamma R}(C\geq 1.3\%)$ was calculated by using formula (12)

$$g(x)=(1/2)\cdot[1+\text{erf}\{(x-u)/\sqrt{(2\sigma^2)}\}] \ ... \text{ formula (11)}$$

$$V_{\gamma R}(C{\geq}1.3\%)=V_{\gamma R}\{1\text{-}g(1.3)\}$$
$$=V_{\gamma R}[0.5\text{-erf}\{(1.3\text{-}\%C_{avg})/\sqrt{(2\sigma_{\%C}{}^2)}\}]\ ...\ \text{formula (12)}$$

Here, $V_{\gamma R}$ is the area ratio of all retained $\gamma$.

Next, the component composition constituting the steel sheet of the present invention is described below. In the following, all of the units of chemical components are mass%. In addition, the "content" of each component is sometimes simply referred to as "amount".

[Component composition of steel sheet of the present invention]

C: from 0.10 to 0.30%

C is an indispensable element to ensure the strength and ductility by contributing to ensuring of the amount (area ratio) of retained austenite. In order to effectively bring out such an action, C must be contained in an amount of 0.10% or more, preferably 0.12% or more, more preferably 0.14% or more. However, if the C amount is excessively large, weldability deteriorates. Accordingly, the C amount is 0.30% or less, preferably 0.28% or less, more preferably 0.26% or less.

Si+Al: from 0.5 to 2.0%

Si and Al are elements capable of effectively preventing retained austenite from decomposing to produce a carbide. In order to effectively bring out such an action, Si and Al must be contained in a total amount of 0.5% or more, preferably 0.7% or more, more preferably 0.9% or more. However, even when Si and Al are contained excessively, the effect above is saturated and this is not only economically wasteful but also causes hot brittleness. Accordingly, the total amount of Si and Al is 20% or less, preferably 1.9% or less, more preferably 1.8% or less.

Mn: from 1.0 to 4.0%

Mn is an element necessary to stabilize austenite and obtain desired retained austenite. In order to effectively bring out such an action, Mn must be contained in an amount of 1.0% or more, preferably 1.3% or more, more preferably 1.6% or more. However, if the Mn amount is excessively large, an adverse effect such as occurrence of slab cracking is produced. Accordingly, the Mn amount is 4.0% or less, preferably 3.5% or less, more preferably 3.0% or less.

P: from 0 to 0.05%

P is unavoidably present as an impurity element but is an element that may be contained so as to ensure desired retained $\gamma$. However, if P is contained excessively, secondary workability deteriorates. Accordingly, the P amount is 0.05% or less, preferably 0.03% or less, more preferably 0.02% or less.

S: from 0 to 0.01%

S is also unavoidably present as an impurity element and is an element that forms a sulfide-based inclusion such as MnS to provide a starting point for cracking and deteriorates the workability. Accordingly, the S amount is 0.01% or less, preferably 0.005% or less, more preferably 0.003% or less.

The steel of the present invention contains the above-described elements as indispensable components, with the remainder being iron and an unavoidable impurity, but in addition, the following allowable components may be contained to an extent not impairing the action of the present invention.

One member or two or more members of Cu, Ni, Mo, Cr, and B: 1.0% or less in total

These elements are useful as a steel strengthening element and are an effective element to stabilize retained $\gamma$ or ensure its predetermined amount. In order to effectively bring out such an action, these elements are recommendably contained in a total amount of 0.001% or more, furthermore 0.01% or more. However, even when these elements are contained excessively, the effects above are saturated, and this is economically wasteful. Accordingly, the total amount of these elements is preferably 1.0% or less, furthermore 0.5% or less.

One member or two or more members of V, Nb, Ti, Zr, and Hf: 0.2% or less in total

These elements have effects of precipitation strengthening and microstructure refinement and are an element useful for providing higher strength. In order to effectively bring out such an action, these elements are recommendably contained in a total amount of 0.01% or more, furthermore 0.02% or more. However, even when these elements are contained excessively, the effects above are saturated, and this is economically wasteful. Accordingly, the total amount of these elements is preferably 0.2% or less, furthermore 0.1% or less.

One member or two or more members of Ca, Mg and REM: 0.01 % or less in total

These elements control the form of sulfide in the steel and are an element effective in enhancing workability. Here, REM (rare earth element) for use in the present invention includes Sc, Y, lanthanoid, etc. In order to effectively bring out the action above, these elements are recommendably contained in a total amount of 0.001 % or more, furthermore 0.002% or more. However, even when these elements are contained excessively, the effects above are saturated, and this is economically wasteful. Accordingly, the total amount of these elements is preferably 0.01% or less, furthermore 0.005% or less.
Preferable manufacturing conditions for obtaining the steel sheet of the present invention are described below.

[Preferable method for manufacturing steel sheet of the present invention]

The steel sheet of the present invention can be manufactured by subjecting a steel material satisfying the above-described component composition to hot rolling, then cold rolling and thereafter, heat treatment under the conditions of, for example, the following steps (1) to (4) (see, Fig. 2).

[Heat treatment conditions]

(1) A cold-rolled sheet is heated to a second heating temperature T2: from Ac1 to [$0.7 \times Ac1 + 0.3 \times Ac3$], and held at that temperature for a second holding time t2: 5 s or more,
(2) the sheet is further heated to a third heating temperature T3: from [$0.7 \times Ac1 + 0.3 \times Ac3$] to [$0.2 \times Ac1 + 0.8 \times Ac3$], but at not less than the second heating temperature T2+0.2x(Ac3-Acl) and held at that temperature for a third holding time t3: 5 s or more,
(3) the sheet is then cooled from the third heating temperature T3 to 500°C at an average cooling rate CR1: 20°C/s or more, and
(4) the sheet is thereafter held at an austempering temperature T4: from 350 to 480°C, for an austempering holding time t4: from 10 to 1,800 s, and then cooled to room temperature.

The reasons for recommending the above-described heat treatment conditions are described below.

<(1) Held at a second heating temperature T2: from Ac1 to [$0.7 \times Ac1 + 0.3 \times Ac3$], for a second holding time t2: 5 s or more>

This is because, by holding in a low temperature range of ferrite/austenite two-phase region for a predetermined time, an Mn concentration distribution is developed during reverse transformation in the two-phase low temperature range, and thus the local speed difference of bainite transformation during austempering treatment in the step (4) is increased, thereby broadening the carbon concentration distribution in retained $\gamma$.
The holding time t2 in the temperature range above is more preferably 10 s or more, still more preferably 20 s or more, and in view of productivity, is recommendably 200 s or less.
Here, Ac1 and Ac3 can be determined from the component composition of the steel sheet by using the formula described in Leslie, "The Physical Metallurgy of Steels", translated by Koda Shigeyasu, page 273, 1985, Maruzen Co., Ltd.

<(2) Further held at a third heating temperature T3: from [$0.7 \times Ac1 + 0.3 \times Ac3$] to [$0.2 \times Ac1 + 0.8 \times Ac3$], but at not less than the second heating temperature T2+0.2x(Ac3-Ac1) for a third holding time t3: 5 s or more>

In addition to the Mn-enriched region formed by holding in the ferrite-austenite two-phase low temperature range in the step (1) of the previous stage, in order to form a region with a low Mn concentration while leaving a predetermined amount of ferrite, heating at a temperature higher by a certain temperature or more than the previous-stage heating temperature (second heating temperature T2) for a predetermined holding time is applied in the two-phase temperature range, leaving the Mn concentration distribution formed in the previous stage. The holding time (third holding time t3) needs to be 5 s or more but for preventing the Mn concentration in austenite from becoming uniform, must be shorter than a conventional annealing time of steel and is recommendably limited to 200 s or less, furthermore 100 s or less.

<(3) Cooled from the third heating temperature T3 to 500°C at an average cooling rate CR1: 20°C/s or more>

This is for preventing formation of ferrite and providing a bainite-based micro structure.
The average cooling rate CR1 in the temperature range above is more preferably 25°C/s or more, still more preferably 30°C/s or more.

<(4) Held at an austempering temperature T4: from 350 to 480°C, for an austempering holding time t4: from 10 to 1,800 s, and then cooled to room temperature>

This is for promoting bainite transformation to cause an enrichment of carbon in untransformed austenite and thereby obtain stable retained γ. However, if the austempering holding time t4 is too long, cementite is locally formed and among others, a region having a high carbon concentration decreases. Accordingly, the upper limit of the austempering holding time t4 is set to 1800 s.

[Modification example of heat treatment conditions]

The step (1) may be configured as in the following step (1a).

(1a) The cold-rolled sheet is heated to a first heating temperature T1: from [Acl-30°C] to [Ac1-10°C], and held at that temperature for a first holding time: 10 s or more, or is heated at an average heating rate of 2°C/s or less in the same temperature range and then held at the second heating temperature T2: from Ac1 to [0:7×Ac1+0.3×Ac3] for the second holding time t2: 5 s or more.

In this way, by previously holding for a predetermined time or gradually heating in the temperature range of ferrite/cementite two-phase region, Mn is enriched in cementite and thereby the Mn concentration distribution between ferrite/austenite during subsequent heating in the ferrite/austenite two-phase region is promoted, and as a result, the local speed difference of bainite transformation during austempering treatment in the step (4) is increased, making it possible to more broaden the carbon concentration distribution in retained γ.
The step (4) may be configured as in the following step (4a).

(4a) The sheet is held at an austempering temperature T4: from 350 to 480°C, for an austempering holding time t4: 10s or more, then reheated to a reheating temperature T5: from 500 to 600°C, held at that temperature for a reheating holding time t5: 30 s or less, and thereafter cooled to room temperature.

In this way, the steel sheet of the present invention may be reheated in a temperature range in which retained γ does not decomposes to cause alloying of a plating layer and thereby fabricated as a plated steel sheet.
The present invention is more specifically described below by referring to Examples, but the present invention is not limited by the following Examples and can be of course carried out by appropriately adding changes within the range adaptable to the gist described above and below, and all of these changes are encompassed by the technical scope of the present invention.

EXAMPLES

A steel having the components shown in Table 1 below was manufactured by vacuum melting, then made into a steel sheet having a sheet thickness of 30 mm by hot forging, and subjected to hot rolling. The hot rolling conditions have substantially no effect on the final microstructure and properties of the steel sheet of the present invention, but in this Example, heating at 1,200°C was performed, followed by multi-stage rolling under the condition of an end temperature of hot rolling of 880°C, thereby obtaining a sheet thickness of 2.5 mm. Then, cooling to 500°C was performed at a cooling rate of 30°C/s and the cooling was stopped, followed by inserting into a furnace heated at 500°C, holding for 30 min, and furnace-cooling to obtain a hot-rolled sheet. This hot-rolled sheet was subjected to pickling to remove surface scales and then cold rolled to 1.4 mm to produce a cold-rolled sheet.
The cold-rolled sheet was used as a starting material and heat-treated under the conditions shown in Table 2 below. Here, the average heating rate from room temperature to the first heating temperature (holding temperature) was set to a constant rate of 10°C/s, the average heating rate to the next heating temperature (holding temperature) was set to a constant rate of 20°C/s, and the average heating rate further to the next heating temperature (holding temperature) was set to a constant rate of 10°C/s. In addition, the average heating rate from the austempering temperature T4 to the reheating temperature T5 was set to a constant rate of 10°C/s, and the average cooling rate from the austempering temperature T4 or reheating temperature T5 to room temperature was set to a constant rate of 10°C/s.

[Table 1]

| Steel Species | Component (mass%) [remainder: Fe and unavoidable impurity] | | | | | | | |
|---|---|---|---|---|---|---|---|---|
| | C | Si | Mn | P | S | Al | Si+Al | Others |
| A | 0.22 | 1.25 | 2.01 | 0.010 | 0.002 | 0.04 | 1.29 | - |
| B | 0.22 | 1.25 | 2.01 | 0.010 | 0.002 | 0.04 | 1.29 | - |
| C | 0.22 | 1.25 | 2.01 | 0.010 | 0.002 | 0.04 | 1.29 | - |
| D | 0.25 | 1.64 | 1.79 | 0.010 | 0.002 | 0.04 | 1.68 | - |
| E | 0.18 | 1.50 | 2.41 | 0.010 | 0.002 | 0.04 | 1.54 | - |
| F | 0.19 | 1.39 | 2.25 | 0.010 | 0.002 | 0.04 | 1.43 | - |
| G | 0.21 | 1.61 | 2.55 | 0.010 | 0.002 | 0.04 | 1.65 | - |
| H | 0.20 | 1.80 | 1.84 | 0.010 | 0.002 | 0.04 | 1.84 | - |
| I | 0.20 | 1.22 | 2.20 | 0.010 | 0.002 | 0.04 | 1.26 | - |
| J | 0.20 | 1.83 | 2.10 | 0.010 | 0.002 | 0.04 | 1.87 | - |
| K | 0.13 | 1.35 | 1.94 | 0.010 | 0.002 | 0.04 | 1.39 | - |
| L | 0.22 | 0.96 | 2.01 | 0.010 | 0.002 | 0.30 | 1.26 | - |
| M | 0.22 | 0.96 | 2.01 | 0.010 | 0.002 | 0.30 | 1.26 | - |
| N | 0.05 | 1.55 | 1.85 | 0.010 | 0.002 | 0.04 | 1.59 | - |
| O | 0.30 | 1.48 | 2.03 | 0.010 | 0.002 | 0.04 | 1.52 | - |
| P | 0.21 | 0.40 | 2.00 | 0.010 | 0.002 | 0.04 | 0.44 | - |
| Q | 0.24 | 1.30 | 0.80 | 0.010 | 0.002 | 0.04 | 1.34 | - |
| R | 0.15 | 1.48 | 5.00 | 0.010 | 0.002 | 0.04 | 1.52 | - |
| S | 0.20 | 1.04 | 2.00 | 0.010 | 0.002 | 0.04 | 1.08 | Cu:0.2 |
| T | 0.25 | 1.44 | 2.14 | 0.010 | 0.002 | 0.04 | 1.48 | Ni:0.2 |
| U | 0.23 | 1.29 | 2.08 | 0.010 | 0.002 | 0.04 | 1.33 | Cr:0.1 |
| V | 0.28 | 1.59 | 2.23 | 0.010 | 0.002 | 0.04 | 1.63 | Mo:0.1 |
| W | 0.30 | 1.50 | 1.84 | 0.010 | 0.002 | 0.04 | 1.54 | B:0.002 Ti:0.02 |
| X | 0.21 | 1.59 | 1.94 | 0.010 | 0.002 | 0.04 | 1.63 | V:0.05 |
| Y | 0.25 | 1.48 | 2.11 | 0.010 | 0.002 | 0.04 | 1.52 | Nb:0.05 |
| Z | 0.30 | 1.93 | 2.05 | 0.010 | 0.002 | 0.04 | 1.97 | Ti:0.05 |
| AA | 0.20 | 1.25 | 2.15 | 0.010 | 0.002 | 0.04 | 1.29 | Mg:0.002 |
| AB | 0.21 | 1.50 | 2.10 | 0.010 | 0.002 | 0.04 | 1.54 | REM:0.002 |

(underline: out of the range of the present invention, -: not added)

(Table 1 Continued)

| Steel Species | Transformation Temperature (°C) | | | | |
|---|---|---|---|---|---|
| | Ac1 | Ac3 | 0.7Ac1+0.3Ac3 | 0.2Ac1+0.8Ac3 | 0.2(Ac3-Ac1) |
| A | 738 | 827 | 765 | 809 | 18 |
| B | 738 | 827 | 765 | 809 | 18 |
| C | 738 | 827 | 765 | 809 | 18 |
| D | 752 | 845 | 780 | 826 | 19 |
| E | 741 | 836 | 769 | 817 | 19 |
| F | 739 | 833 | 768 | 814 | 19 |
| G | 743 | 829 | 769 | 812 | 17 |
| H | 756 | 861 | 787 | 840 | 21 |
| I | 735 | 825 | 762 | 807 | 18 |
| J | 754 | 855 | 784 | 835 | 20 |
| K | 742 | 856 | 776 | 833 | 23 |
| L | 729 | 918 | 786 | 881 | 38 |
| M | 729 | 918 | 786 | 881 | 38 |
| N | 748 | 895 | 792 | 866 | 29 |
| O | 744 | 821 | 767 | 806 | 15 |
| P | 719 | 800 | 743 | 784 | 16 |
| Q | 752 | 862 | 785 | 840 | 22 |
| R | 713 | 765 | 728 | 754 | 10 |
| S | 732 | 827 | 760 | 808 | 19 |
| T | 739 | 823 | 764 | 806 | 17 |
| U | 740 | 824 | 765 | 807 | 17 |
| V | 745 | 827 | 770 | 811 | 16 |
| W | 747 | 818 | 768 | 804 | 14 |
| X | 749 | 852 | 780 | 831 | 21 |
| Y | 743 | 828 | 769 | 811 | 17 |
| Z | 757 | 821 | 776 | 808 | 13 |
| AA | 736 | 828 | 764 | 809 | 18 |
| AB | 744 | 838 | 772 | 819 | 19 |

(underline: out of the range of the present invention, -: not added)

[Table 2]

| Heat Treatment No. | Steel Species | T1 (°C) | t1 (s) | T2 (°C) | t2 (s) | T3 (°C) | t3 (s) | CR1 (°C/s) | T4 (°C) | t4 (s) | T5 (°C) | t5 (s) |
|---|---|---|---|---|---|---|---|---|---|---|---|---|
| 1* | A | -* | -* | -* | -* | 800 | 40 | 28 | 400 | 600 | - | - |
| 2 | B | - | - | 750 | 10 | 800 | 40 | 28 | 400 | 600 | - | - |
| 3 | C | 730 | 10 | 750 | 20 | 800 | 40 | 28 | 400 | 600 | - | - |
| 4* | D | - | - | 765 | 10 | 900* | 40 | 28 | 400 | 600 | - | - |
| 5 | E | - | - | 750 | 10 | 800 | 40 | 28 | 400 | 600 | - | - |
| 6* | F | - | - | 750 | 10 | 800 | 40 | 28 | 400 | 3600* | - | - |

(continued)

| Heat Treatment No. | Steel Species | T1 (°C) | t1 (s) | T2 (°C) | t2 (s) | T3 (°C) | t3 (s) | CR1 (°C/s) | T4 (°C) | t4 (s) | T5 (°C) | t5 (s) |
|---|---|---|---|---|---|---|---|---|---|---|---|---|
| 7* | G | - | - | 750 | 10 | 800 | 40 | 10* | 400 | 600 | - | - |
| 8* | H | - | - | 770 | 10 | 800 | 40 | 28 | 510* | 600 | - | - |
| 9* | I | - | - | 740 | 10 | 800 | 40 | 28 | 320* | 600 | - | - |
| 10 | J | 740 | 10 | 750 | 20 | 800 | 40 | 28 | 400 | 600 | 510 | 10 |
| 11 | K | 730 | 10 | 750 | 20 | 800 | 40 | 28 | 400 | 600 | - | - |
| 12 | L | - | - | 740 | 10 | 800 | 40 | 28 | 400 | 600 | - | - |
| 13* | M | -* | -* | -* | -* | 800 | 40 | 28 | 400 | 600 | - | - |
| 14 | <u>N</u> | - | - | 760 | 10 | 800 | 40 | 28 | 400 | 600 | - | - |
| 15 | O | - | - | 750 | 10 | 800 | 40 | 28 | 400 | 600 | - | - |
| 16 | <u>P</u> | - | - | 730 | 10 | 800 | 40 | 28 | 400 | 600 | - | - |
| 17 | <u>Q</u> | - | - | 760 | 10 | 800 | 40 | 28 | 400 | 600 | - | - |
| 18 | <u>R</u> | - | - | 720 | 10 | 750 | 40 | 28 | 400 | 600 | - | - |
| 19 | S | 740 | 10 | 800 | 20 | 900 | 40 | 28 | 400 | 600 | - | - |
| 20 | T | 750 | 10 | 800 | 20 | 900 | 40 | 28 | 400 | 600 | - | - |
| 21 | U | 750 | 10 | 800 | 20 | 900 | 40 | 28 | 400 | 600 | - | - |
| 22 | V | 760 | 10 | 800 | 20 | 900 | 40 | 28 | 400 | 600 | - | - |
| 23 | W | 760 | 10 | 800 | 20 | 900 | 40 | 28 | 400 | 600 | - | - |
| 24 | X | 760 | 10 | 800 | 20 | 900 | 40 | 28 | 400 | 600 | - | - |
| 25 | Y | 750 | 10 | 800 | 20 | 900 | 40 | 28 | 400 | 600 | - | - |
| 26 | Z | 770 | 10 | 800 | 20 | 900 | 40 | 28 | 400 | 600 | - | - |
| 27 | AA | 750 | 10 | 800 | 20 | 900 | 40 | 28 | 400 | 600 | - | - |
| 28 | AB | 750 | 10 | 800 | 20 | 900 | 40 | 28 | 400 | 600 | - | - |

(underline: out of the range of the present invention,
*: out of the recommended range, -: not applied)

With respect to each steel sheet after the heat treatment above, the area ratios of retained $\gamma$ and ferrite and the average carbon concentration ($C\gamma R$) and carbon concentration distribution in retained $\gamma$ were measured by the measuring methods described in the item of [MODES FOR CARRYING OUT THE INVENTION].

In all microstructures of steel sheets used in this Example, the remainder other than retained austenite and ferrite was composed of one member or two or more members of bainite, martensite, tempered bainite and tempered martensite and therefore, in Table 3 below, only the area ratios of retained austenite and ferrite are shown.

With respect to each steel sheet after the heat treatment above, in order to evaluate the strength-ductility balance, the yield strength YS, tensile strength TS and elongation (total elongation) EL were measured by a tensile test. The tensile test was conducted in accordance with JIS Z 2241 by preparing a JIS No. 5 specimen.

The measurement results are shown in Table 3 below. In this Table, those where the steel sheet after the heat treatment had properties of a tensile test (TS) of 980 MPa or more and a tensile strength (TS) $\times$ elongation (EL) of 25,000 MPa·% or more were judged as pass (A), and others were judged as fail (B).

[Table 3]

| Steel No. | Steel Species | Heat Treatment No. | Steel Microstructure | | | | |
|---|---|---|---|---|---|---|---|
| | | | Area Ratio (%) | | Carbon Concentration Distribution in $\gamma_R$ | | |
| | | | $\gamma_R$ | $\alpha$ | $\%C\gamma_R$ (mass%) | $\sigma\%C$ (mass%) | $V\gamma_R(C \geq 1.3\%)$ (%) |
| 1 | A | 1* | 12.8 | 18 | 1.02 | 0.23 | 1.43 |
| 2 | B | 2 | 13.2 | 13 | 0.98 | 0.35 | 2.38 |
| 3 | C | 3 | 13.0 | 17 | 1.01 | 0.41 | 3.12 |
| 4 | D | 4* | 9.0 | 0 | 0.92 | 0.47 | 1.88 |
| 5 | E | 5 | 12.7 | 18 | 1.01 | 0.38 | 2.83 |
| 6 | F | 6* | 9.5 | 16 | 0.92 | 0.29 | 0.90 |
| 7 | G | 7* | 3.9 | 44 | 0.98 | 0.31 | 0.59 |
| 8 | H | 8* | 10.5 | 13 | 0.81 | 0.34 | 0.79 |
| 9 | I | 9* | 4.1 | 17 | 1.09 | 0.38 | 1.19 |
| 10 | J | 10 | 13.5 | 17 | 1.02 | 0.36 | 2.95 |
| 11 | K | 11 | 10.4 | 13 | 1.01 | 0.34 | 2.05 |
| 12 | L | 12 | 12.3 | 15 | 1.07 | 0.36 | 4.42 |
| 13 | M | 13* | 11.1 | 13 | 1.17 | 0.21 | 2.97 |
| 14 | N | 14 | 1.4 | 16 | 1.02 | 0.35 | 0.31 |
| 15 | O | 15 | 15.3 | 18 | 1.04 | 0.35 | 3.19 |
| 16 | P | 16 | 2.4 | 17 | 1.02 | 0.36 | 0.46 |
| 17 | Q | 17 | 9.6 | 56 | 1.01 | 0.35 | 2.02 |
| 18 | R | 18 | 2.4 | 14 | 0.82 | 0.42 | 0.30 |
| 19 | S | 19 | 12.9 | 16 | 1.02 | 0.35 | 2.47 |
| 20 | T | 20 | 14.1 | 16 | 1.02 | 0.32 | 1.99 |
| 21 | U | 21 | 14.4 | 15 | 1.02 | 0.34 | 2.30 |
| 22 | V | 22 | 12.8 | 13 | 0.99 | 0.34 | 2.91 |
| 23 | W | 23 | 13.5 | 13 | 1.02 | 0.32 | 2.41 |
| 24 | X | 24 | 13.8 | 18 | 0.98 | 0.36 | 2.36 |
| 25 | Y | 25 | 14.2 | 17 | 1.01 | 0.35 | 2.64 |
| 26 | Z | 26 | 13.7 | 14 | 1.01 | 0.35 | 2.52 |
| 27 | AA | 27 | 13.2 | 13 | 1.03 | 0.36 | 3.07 |
| 28 | AB | 28 | 14.3 | 17 | 1.03 | 0.32 | 2.85 |

(underline: out of the range of the present invention,

*: out of the recommended range, $\alpha$: ferrite)

(Table 3 Continued)

| Steel No. | Steel Species | Heat Treatment No. | Mechanical Properties | | | | Judgment |
|---|---|---|---|---|---|---|---|
| | | | YS (MPa) | TS (MPa) | EL (%) | TS×EL (MPa·%) | |
| 1 | A | 1* | 654 | 1020 | 15.2 | 15504 | B |
| 2 | B | 2 | 646 | 1014 | 25.4 | 25760 | A |
| 3 | C | 3 | 603 | 997 | 28.4 | 28333 | A |
| 4 | D | 4* | 641 | 1013 | 16.8 | 17018 | B |
| 5 | E | 5 | 666 | 1046 | 25.0 | 26171 | A |
| 6 | F | 6* | 642 | 991 | 23.4 | 23159 | B |
| 7 | G | 7* | 504 | 811 | 22.4 | 18203 | B |
| 8 | H | 8* | 604 | 985 | 23.0 | 22689 | B |
| 9 | I | 9* | 794 | 1255 | 13.8 | 17304 | B |
| 10 | J | 10 | 637 | 1035 | 25.3 | 26149 | A |
| 11 | K | 11 | 619 | 997 | 25.8 | 25760 | A |
| 12 | L | 12 | 642 | 1027 | 28.6 | 29321 | A |
| 13 | M | 13* | 611 | 987 | 23.1 | 22800 | B |
| 14 | N | 14 | 677 | 1058 | 14.4 | 15235 | B |
| 15 | O | 15 | 714 | 1181 | 26.4 | 31221 | A |
| 16 | P | 16 | 645 | 1010 | 15.6 | 15756 | B |
| 17 | Q | 17 | 649 | 837 | 25.1 | 21009 | B |
| 18 | R | 18 | 621 | 990 | 20.9 | 20691 | B |
| 19 | S | 19 | 603 | 993 | 25.8 | 25661 | A |
| 20 | T | 20 | 702 | 1089 | 23.7 | 25814 | A |
| 21 | U | 21 | 699 | 1113 | 25.7 | 28561 | A |
| 22 | V | 22 | 725 | 1186 | 22.8 | 26996 | A |
| 23 | W | 23 | 754 | 1250 | 23.9 | 29925 | A |
| 24 | X | 24 | 661 | 1075 | 29.2 | 31434 | A |
| 25 | Y | 25 | 715 | 1150 | 23.0 | 26393 | A |
| 26 | Z | 26 | 753 | 1221 | 23.0 | 28135 | A |
| 27 | AA | 27 | 664 | 1045 | 29.0 | 30316 | A |
| 28 | AB | 28 | 666 | 1069 | 23.9 | 25538 | A |

(underline: out of the range of the present invention,

*: out of the recommended range, α: ferrite)

As shown in Table 3 above, Steel Nos. 2, 3, 5, 10 to 12, 15, and 19 to 28, which are inventive steels (rated A), where steel species satisfying the requirements specifying the components of the present invention were used and the heat treatment was performed under recommended conditions, are as a result the inventive steel satisfying the requirements specifying the microstructure of the present invention and having mechanical properties satisfying the acceptance criteria, and it could be confirmed that a high-strength high-ductility steel sheet having excellent strength-ductility balance is obtained.

On the other hand, in Steel Nos. 1, 4, 6 to 9, 13, 14, and 16 to 18, which are comparative steels (rated B), at least any one of the requirements specifying the components and specifying the microstructure of the present invention is not fulfilled, and the properties do not satisfy the acceptance criteria.

More specifically, each of Steel Nos. 1, 4, 6 to 9, and 13 uses a steel species satisfying the requirements specifying the components of the present invention but is manufactured under the conditions deviating in part from the recommended manufacturing conditions and therefore does not fulfill the requirements specifying the microstructure, leading to poor properties.

On the other hand, each of Steel Nos. 14 and 16 to 18 is manufactured under the recommended manufacturing conditions but uses a steel species deviating in part from the requirements specifying the components of the present invention and therefore does not fulfill the requirements specifying the microstructure, leading to poor properties.

As above, the applicability of the present invention was verified.

While the present invention has been described in detail and with reference to specific embodiments thereof, it will be apparent to one skilled in the art that various changes and modifications can be made therein without departing from the spirit and scope of the present invention.

The present application is based on a Japanese patent application filed on November 21, 2014 (Application No. 2014-236928), the content thereof being incorporated herein by reference.

INDUSTRIAL APPLICABILITY

The steel sheet of the present invention has high tensile strength and excellent strength-ductility balance and is useful, e.g., as a thin steel sheet for automobiles.

Claims

1. A high-strength high-ductility steel sheet, having a component composition comprising, in mass%,
   C: from 0.10 to 0.30%,
   Si+Al: from 0.5 to 2.0%,
   Mn: from 1.0 to 4.0%,
   P: from 0 to 0.05%, and
   S: from 0 to 0.01%,
   with the remainder being iron and an unavoidable impurity,
   wherein a steel microstructure comprises,
   in terms of an area ratio relative to the entire microstructure,
   8% or more of a retained austenite and
   more than 5% and 50% or less of ferrite,
   with the remainder being one member or two or more members of bainite, martensite, tempered bainite, and tempered martensite, and
   with respect to a carbon concentration in the retained austenite,
   an average carbon concentration is from 0.8 to 1.1 mass%,
   a standard deviation of a carbon concentration distribution is 0.25 mass% or more, and
   an area ratio of a region having the carbon concentration of 1.3 mass% or more, relative to the entire microstructure, is 1.0% or more.

2. The high-strength high-ductility steel sheet according to Claim 1, wherein the component composition further comprises, in mass%, any one of the following (a) to (c):

   (a) a total of 1.0% or less of one member or two or more members of Cu, Ni, Mo, Cr, and B;
   (b) a total of 0.2% or less of one member or two or more members of V, Nb, Ti, Zr, and Hf; and
   (c) a total of 0.01 % or less of one member or two or more members of Ca, Mg and REM.

# Fig. 1

# Fig. 2

## INTERNATIONAL SEARCH REPORT

| International application No. |
| --- |
| PCT/JP2015/082758 |

### A. CLASSIFICATION OF SUBJECT MATTER
*C22C38/00*(2006.01)i, *C21D9/46*(2006.01)i, *C22C38/06*(2006.01)i, *C22C38/58* (2006.01)i

According to International Patent Classification (IPC) or to both national classification and IPC

### B. FIELDS SEARCHED

Minimum documentation searched (classification system followed by classification symbols)
C22C38/00-C22C38/60, C21D9/46-C21D9/48

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2013-32581 A (Nippon Steel & Sumitomo Metal Corp.), 14 February 2013 (14.02.2013), & US 2014/0238557 A1    & WO 2013/005714 A1 & EP 2730666 A1        & CA 2841056 A1 & CN 103797135 A        & KR 10-2014-0033226 A & MX 2014000125 A       & RU 2014104098 A | 1,2 |
| A | JP 2012-180570 A (Kobe Steel, Ltd.), 20 September 2012 (20.09.2012), claims; 0066 to 0070; tables 1, 2, 3 & US 2013/0330226 A1 0110 to 0114; tables 1, 2, 2-continued, 3; claims & GB 2502026 A          & WO 2012/118040 A1 & CN 103403210 A        & KR 10-2013-0121963 A | 1,2 |

| ☒ Further documents are listed in the continuation of Box C. | ☐ See patent family annex. |
| --- | --- |

\*      Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| 04 February 2016 (04.02.16) | 16 February 2016 (16.02.16) |

| Name and mailing address of the ISA/ Japan Patent Office 3-4-3,Kasumigaseki,Chiyoda-ku, Tokyo 100-8915,Japan | Authorized officer Telephone No. |
| --- | --- |

Form PCT/ISA/210 (second sheet) (January 2015)

**INTERNATIONAL SEARCH REPORT**

| International application No. |
|---|
| PCT/JP2015/082758 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-214869 A  (Kobe Steel, Ltd.),<br>08 November 2012 (08.11.2012),<br>& US 2014/0044988 A1    & WO 2012/133057 A1<br>& EP 2695961 A1        & EP 2942416 A1<br>& CN 103459638 A       & KR 10-2013-0125829 A<br>& KR 10-2015-0050592 A  & CN 104762565 A | 1,2 |
| A | JP 2012-41573 A  (Nippon Steel Corp.),<br>01 March 2012 (01.03.2012),<br>(Family: none) | 1,2 |
| A | JP 2011-195956 A  (Nippon Steel Corp.),<br>06 October 2011 (06.10.2011),<br>(Family: none) | 1,2 |
| A | WO 2014/139625 A1  (TATA STEEL IJMUIDEN BV),<br>18 September 2014 (18.09.2014),<br>& CA 2903916 A1 | 1,2 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012041573 A
- JP 2012021225 A
- JP 2012031505 A
- JP 2014236928 A

**Non-patent literature cited in the description**

- *ISIJ Int.,* 1933, vol. 33 (7), 776
- **DYSON D.J. ; HOLMES B.** Effect of alloying additions on the lattice parameter austenite. *J. Iron Steel Inst.,* 1970, vol. 208, 469-474
- **LESLIE.** The Physical Metallurgy of Steels. Maruzen Co., Ltd, 1985, 273